# FASCICULE DE BREVET EUROPEEN

(11) **EP 2 176 091 B1**
(45) Date de publication et mention de la délivrance du brevet: **02.05.2012**
(21) Numéro de dépôt: 08774904.0
(22) Date de dépôt: 09.07.2008
(51) Int. Cl.: B60R 13/02, B64C 1/40, G10K 11/178

(54) **AVION À CONFORT ACOUSTIQUE AMÉLIORÉ**
FLUGZEUG MIT VERBESSERTEM AKUSTISCHEM KOMFORT
AEROPLANE WITH IMPROVED ACOUSTIC COMFORT

(30) Priorité: 10.07.2007 FR 0704987
(43) Date de publication de la demande: 21.04.2010
(73) Titulaire: European Aeronautic Defence and Space Company EADS France, 75016 Paris (FR)
(72) Inventeur: PETITJEAN, Benoit, F-92370 Chaville (FR)
(74) Mandataire: Schmit, Christian Norbert Marie
(86) Numéro de dépôt international: PCT/EP2008/058891
(87) Numéro de publication internationale: WO 2009/007387

(56) Documents cités:
- WO-A-00/36590
- WO-A-98/16916
- FR-A- 2 704 084
- US-A- 6 078 673
- US-B1- 6 181 797

## Description

La présente invention appartient au domaine des aéronefs de transport.

En particulier, l'invention s'adresse à des aéronefs pour lesquels un confort acoustique, c'est à dire un niveau de bruit aussi réduit que possible est recherché dans des zones où se trouvent pendant le vol des personnes, passagers ou membres d'équipage. Plus particulièrement l'invention concerne des aéronefs pour lesquels il est recherché un confort acoustique aisément modifiable dans différentes zones, sans remise en cause des équipements et aménagements de l'aéronef.

Dans un aéronef, diverses sources d'émission de bruits conduisent à engendrer une ambiance sonore dans les zones occupées par les personnes, des zones de cabines pour passagers ou un poste d'équipage, pouvant suivant les cas être considérée comme sources d'inconfort ou comme sources de gêne, voir dans les cas des cas plus extrêmes comme sources de fatigue.

Parmi les bruits les plus fréquemment identifiés, il convient de citer les bruits en provenance des moteurs de propulsion, les bruits aérodynamiques extérieurs et les bruits intérieurs, notamment ceux liés aux systèmes de conditionnement d'air et de ventilation des équipements.

Pour diminuer le niveau de bruit dans une zone donnée, la solution la plus généralement pratiquée consiste à mettre en oeuvre, au niveau des parois de la zone, des matériaux qui ont des propriétés dites d'absorption acoustique, c'est à dire des matériaux qui ont pour effet de diminuer l'intensité des ondes acoustiques en provoquant un amortissement accéléré des dites ondes.

De tels matériaux, par exemple de la laine de verre organisée sous la forme de matelas, sont généralement utilisés sur les aéronefs au niveau des parois des cabines entre le revêtement structural du fuselage et des panneaux d'habillage de la cabine.

Dans ce type d'arrangement, les matelas contenant la laine de verre joue le double rôle d'isolant thermique et d'absorbant acoustique, et les panneaux d'habillage assurent la protection des matelas et l'esthétique de la cabine.

Cependant cette solution n'apporte qu'une amélioration limitée du confort acoustique car certaines fréquences, en particulier les basses fréquences du domaine audible, ne peuvent pas être absorbées de manière efficace sans utiliser des quantités importantes de matériaux absorbants inacceptables à bord d'un aéronef en raison des contraintes de poids et de volume qui caractérisent la conception des aéronefs.

Une autre méthode connue pour réduire le niveau des bruits dans un espace en général et dans une cabine en particulier est connue sous l'expression de contrôle actif du bruit. Cette méthode est par exemple illustrée par le document WO-A-98/16916.

Le contrôle actif du bruit consiste à mesurer le bruit ambiant et à générer un bruit destructeur par le contrôle de l'amplitude et de la phase du bruit destructeur.

Pour générer le bruit destructeur, la solution consiste à disposer dans l'espace dans lequel doit être réduit le bruit, par exemple une cabine, des haut-parleurs qui sont alimentés en phase et en intensité pour générer des ondes acoustiques qui réduisent par interférence le niveau d'énergie sonore dans des zones choisies de l'espace traité. Cette solution qui consiste à ajouter des haut-parleurs s'avère pénalisant en raison du poids, du volume et des contraintes d'installation des haut-parleurs.

Le plus souvent l'espace dans lequel les haut-parleurs peuvent être installés est limité et se posent alors des problèmes d'interférences mécaniques avec d'autres équipements et avec les panneaux d'habillage.

En particulier, lorsque le dispositif de réduction de bruit est installé dans une cabine d'aéronef, les panneaux d'habillage étant actuellement conçus initialement sans prévision de l'installation d'un dispositif de contrôle actif du bruit, le montage des haut-parleurs nécessite le plus souvent de modifier la forme des panneaux d'habillage existants pour installer les haut-parleurs du dispositif de contrôle actif du bruit.

De plus les systèmes de réduction de bruit utilisent généralement de nombreux haut-parleurs qui génèrent des contraintes de câblage et de connexions électriques pour leurs contrôles et leurs alimentations et qui nécessitent également la modification ou le remplacement de panneaux d'habillage existants et la pose de nouveaux supports destinés à maintenir les nouveaux câbles électriques du système, lesquels câbles doivent en plus être agencés en respectant des contraintes sévères par rapport aux installations électriques existantes pour des raisons de sécurité et de bon fonctionnement des systèmes électriques de l'aéronef.

L'installation a posteriori d'un système actif de réduction de bruit dans un aéronef existant s'avère donc particulièrement pénalisant et nécessite de nombreuses modifications délicates à réaliser.

Pour éviter les inconvénients des solutions connues, l'invention propose un procédé de conversion selon la revendication 1 ainsi qu'un avion selon la revendication 5. L'aéronef, comporte un réseau d'alimentation de panneaux d'habillage actifs, adapté à l'alimentation d'une configuration d'une cabine dans laquelle tous les panneaux d'habillage actifs envisagés dans ladite cabine sont installés, et un système d'alimentation des panneaux actifs, ledit réseau d'alimentation et ledit système d'alimentation étant installés dans l'aéronef indépendamment du nombre de panneaux d'habillage actifs effectivement installés.

Pour cela un avion comportant au moins une cabine dont au moins une partie de l'espace est délimitée par des panneaux d'habillage, est pourvu d'un système de contrôle actif du bruit ambiant dans ladite cabine, et :
- chaque panneau d'habillage de la cabine est soit un panneau, dit panneau actif, comportant des actionneurs alimentés par le système de contrôle actif du bruit, soit un panneau, dit panneau passif ne comportant pas de tels actionneurs ;
- au moins un panneau d'habillage de la cabine d'un type, actif ou passif, est mécaniquement interchangeable avec un panneau de l'autre type, respectivement passif ou actif ;
- un câblage d'alimentation de panneaux actifs apte à être raccordé à des panneaux actifs est agencé dans l'aéronef de sorte que ledit câblage soit en mesure d'alimenter l'ensemble des panneaux actifs susceptibles d'être installés dans la cabine, que les dits panneaux actifs soient effectivement installés ou que des panneaux passifs interchangeables soient installés ;
- un système d'alimentation des panneaux actifs à bord de l'aéronef est raccordé au câblage d'alimentation des panneaux actifs.

De préférence, les actionneurs sont agencés sur les panneaux pour entraîner les panneaux actifs en vibration, et avantageusement pour garantir l'interchangeabilité des panneaux actifs et des panneaux passifs, les actionneurs sont intégrés dans l'épaisseur des panneaux actifs, par exemple par la réalisation d'actionneurs utilisant une technologie piézo-électrique.

De préférence le câblage d'alimentation des panneaux actifs comporte également des câbles de raccordement de capteurs du système de contrôle actif du bruit au système d'alimentation des panneaux actifs et les capteurs sont, pour partie au moins, solidaires de panneaux actifs.

Afin de maintenir les prises du câblage d'alimentation des panneaux actifs se trouvant dans des configurations où un panneau actif correspondant à une prise est remplacé par un panneau passif, les panneaux passifs appelé à se substituer à des panneaux actifs comportent au moins un connecteur factice sur lequel est en mesure d'être fixée la prise pour panneau actif du câblage d'alimentation des panneaux actifs.

Pour obtenir la meilleure modularité possible en terme de confort acoustique d'une cabine, de préférence chaque panneau actif d'une cabine est interchangeable mécaniquement avec un panneau passif et inversement.

L'invention concerne également un procédé pour modifier le confort acoustique d'un aéronef dans lequel au moins un panneau passif est remplacé par un panneau d'habillage actif mécaniquement interchangeable, ledit panneau actif étant alors raccordé au câblage du système de contrôle actif du bruit, ou dans lequel un panneau d'habillage actif est déconnecté du système de contrôle actif du bruit puis remplacé par un panneau passif mécaniquement interchangeable.

Afin d'alimenter de manière optimale les panneaux actifs dans un nouvel agencement, le système d'alimentation des panneaux actifs est configuré en fonction des panneaux actifs effectivement installés.

La description détaillée d'un exemple de réalisation de l'invention est faite en référence aux figures qui représentent de façon schématique :
Figure 1 : une vue générale d'un aéronef, ici un avion de transport civil à réacteurs ;
Figure 2 : un exemple de section d'un fuselage illustrant les principaux éléments d'une section ;
Figure 3 : une vue d'ensemble du dispositif avec des panneaux représentatifs d'un côté d'une cabine de l'aéronef ;
Figure 4 : un exemple de panneau d'habillage actif utilisé pour la mise en oeuvre de l'invention ;
Figure 5 : un schéma fonctionnel du dispositif illustré sur une section partielle d'une paroi de fuselage.

Suivant l'invention un aéronef 1 comporte au moins une cabine 2, comporte un ensemble de câblages électriques 3 aptes à être raccordés d'une part à des panneaux d'habillage de la cabine, les dits panneaux d'habillage étant dits actifs sur le plan acoustique, et d'autre part à un système d'alimentation 61 de panneaux actifs, et comporte un ensemble de panneaux d'habillage de la cabine, les dits panneaux d'habillage pouvant être actifs 4 ou passifs 5, c'est à dire non actifs.

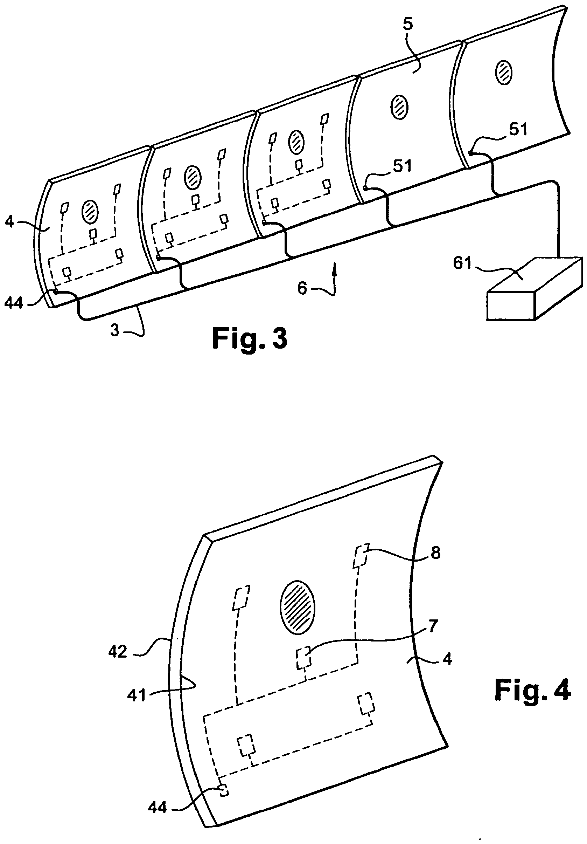

En référence à la figure 3, le système d'alimentation 61 des panneaux actifs, le câblage électrique 3 et les panneaux actifs 4 forment un système 6 de contrôle actif du bruit de la cabine 2.

Par cabine il convient de comprendre pour l'application de la présente invention tout espace d'un aéronef 1 dans lequel un niveau de bruit réduit est en général recherché en raison de la présence possible de personnes dans ledit espace. Le terme cabine concerne donc indifféremment une cabine pour passagers, un poste de pilotage, une zone de repos pour un équipage ou toute zone équivalente.

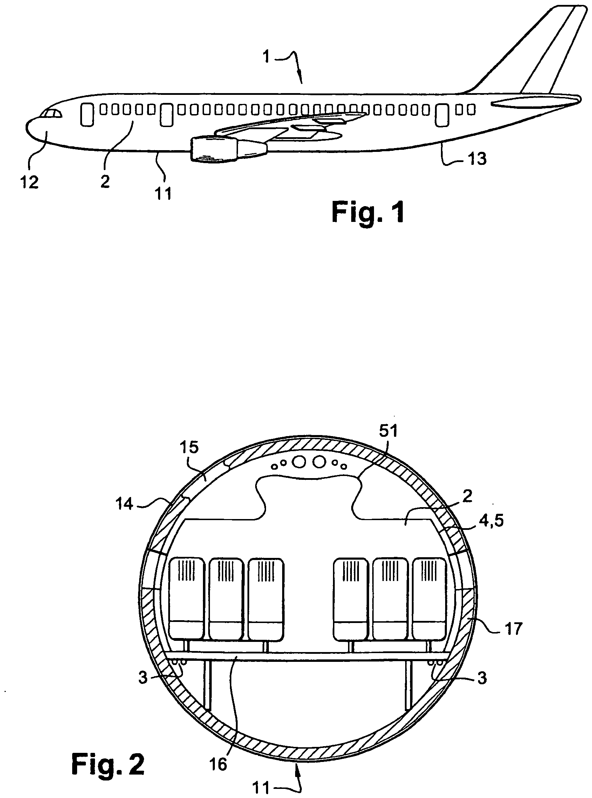

Le plus souvent, comme illustré sur la figure 1 et sur la figure 2 à titre d'exemple non limitatif, dans les aéronefs actuels les cabines 1 sont principalement des espaces aménagés dans un fuselage 11 comportant une zone sensiblement cylindrique entre une pointe avant 12 et une pointe arrière 13 de formes évolutives.

Pour des aéronefs d'architectures non conventionnelles, non représentées, les cabines 1 sont le cas échéant des espaces aménagés dans d'autres zones de l'aéronef comme par exemple dans une aile d'un aéronef ayant une architecture d'aile volante.

Comme il sera compris à la lecture du mode de réalisation décrit de l'invention, l'invention est applicable à tout type de forme de cabine, d'un aéronef d'architecture conventionnelle ou non, par des adaptations à la portée de l'homme du métier.

La figure 2 illustre un exemple d'une section courante de fuselage 11 cylindrique au niveau d'une cabine 2.

Une telle section met en évidence que le fuselage 11 comporte une structure extérieure comportant un revêtement 14 fixé sur des cadres structuraux 15, une structure formant un plancher 16 de la cabine 2 et des aménagements divers.

Parmi les aménagements, des panneaux d'habillage 4, 5 de la cabine 2 sont agencés sur des parois latérales de ladite cabine afin d'assurer une esthétique satisfaisante pour la cabine et de séparer un espace vie de la cabine 2 de la structure du fuselage 11.

Les panneaux d'habillage 4, 5 sont en pratique fixés très proches des cadres 15 du fuselage 11 pour ne pas pénaliser le volume de la cabine 2 offert aux occupants de ladite cabine.

Pour assurer une certaine isolation thermique vis à vis de la structure relativement froide en raison de son contact direct avec l'air extérieur, l'espace situé entre le revêtement du fuselage et les panneaux et entre les cadres, toujours plus ou moins espacés, est partiellement comblé avec des matelas 17 de laine de verre.

Le câblage électrique 3 du système 6 de contrôle actif du bruit est agencé pour distribuer des alimentations aux panneaux actifs 4 le long des parois de la cabine en tout point où un panneau actif 4 est effectivement monté et également en tout point où un panneau actif est susceptible d'être monté.

En pratique, et pour répondre à des exigences d'installation de tout agencement possible pour une cabine, le câblage électrique 3 est conçu, comme l'illustre la figure 3, en considérant que tous les panneaux d'habillage, actifs 4 et passifs 5, sauf pour ceux qui seraient considérés comme ne devant jamais correspondre à des panneaux actifs, sont des panneaux actifs.

Comme illustré sur la figure 2 un câblage électrique 3 du système de contrôle actif comporte avantageusement des câbles fixés à proximité des panneaux d'habillage latéraux 4, 5 de la cabine 2 par exemple cheminant sous le plancher 3 de la cabine à proximité des parois du fuselage recouvert des dits panneaux d'habillage.

D'autres cheminements sont bien sûr possible, par exemple entre la structure du fuselage et les panneaux d'habillage latéraux 4, 5 ou au-dessus de panneaux d'habillage du plafond 51, en fonction en particulier de critères de masse de l'installation électrique en question et de la compatibilité avec d'autres systèmes, non représentés, électriques de l'aéronef.

A une extrémité du câblage opposée aux extrémités pouvant être connectées aux panneaux d'habillage actifs, le câblage est raccordé au système 61 d'alimentation des panneaux actifs.

De manière connue dans un système de contrôle actif du bruit, le système d'alimentation 61 des panneaux actifs reçoit des signaux issus de capteurs 7, par exemple des accéléromètres de mesure de vibrations acoustiques répartis dans l'aéronef et génère un signal d'alimentation d'actionneurs 8 intégrés dans les panneaux d'habillage actifs 4, les dits actionneurs étant aptes à provoquer la mise en vibration des dits panneaux.

Les caractéristiques du signal d'alimentation sont adaptées à la technologie des actionneurs, par exemple des actionneurs de technologie piézo-électrique nécessitant un amplificateur à relativement haute tension 63, et le signal est modulé en phase et en amplitude en fonction des signaux reçus des capteurs 7 suite à un traitement des dits signaux, traitement réalisé par exemple au moyen d'un processeur 62.

Dans la présente invention le câblage nécessaire au fonctionnement des capteurs 7 et à la transmission des signaux de mesure, câblage pouvant utiliser tout type de technologie, par exemple des câbles optiques pour la transmission des signaux de mesure, est avantageusement intégré au câblage électrique 3 du système de contrôle actif du bruit, les cheminements des signaux de mesure pouvant cependant être plus ou moins distants de ceux des signaux d'alimentation.

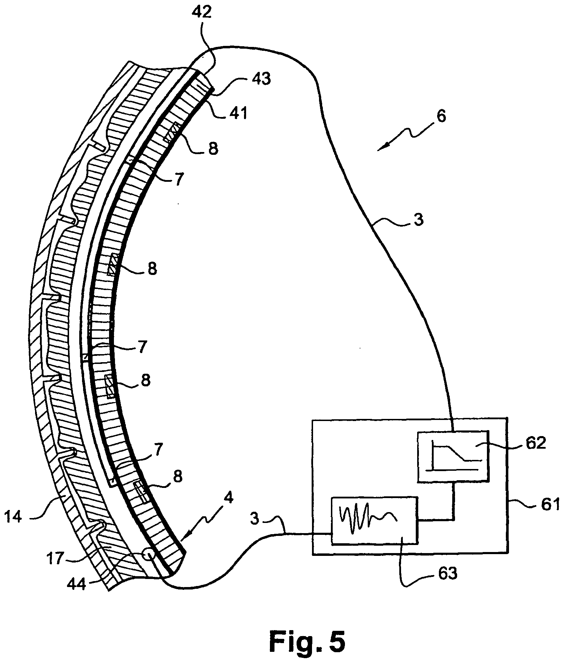

Pour la réalisation de l'invention suivant un mode préféré, un panneau d'habillage actif 4, comme illustré sur la figure 4 ou la figure 5, comporte un revêtement 41, par exemple un revêtement d'une structure de panneau sandwich à âme alvéolaire 43, situé du côté de la cabine 2, sur une face duquel revêtement, non visible depuis la cabine, sont fixés les actionneurs 8, avantageusement des actionneurs de technologie piézo-électrique intégrés dans l'épaisseur du panneau d'habillage actif 4.

Avantageusement au moins une partie des capteurs 7 nécessaires au fonctionnement du système 6 de contrôle actif du bruit sont intégrés dans l'épaisseur du panneau d'habillage actif 4 ou le cas échéant fixés sur une face 42 non visible depuis la cabine dudit panneau comme illustré sur l'exemple de la figure 5.

Dans d'autres formes non représentées de réalisation de invention, les capteurs 7, ou au moins une partie d'entre eux, sont répartis, en fonction des performances recherchées pour le système 6 de contrôle actif du bruit, dans la cabine sur des structures ou des panneaux d'habillage autres que les panneaux d'habillage actifs 4.

De préférence l'ensemble des connexions avec les actionneurs et ou les capteurs d'un panneau d'habillage actif 4 est regroupé au niveau d'un connecteur unique 44 solidaire du panneau 4, ou le cas échéant d'un nombre limité de connecteurs, par exemple un connecteur dédié aux actionneurs et un connecteur (non représenté) dédié aux capteurs ce qui permet de séparer les signaux forts des signaux faibles.

Pour permettre une interchangeabilité mécanique entre les panneaux actifs 4 et les panneaux passifs 5, les deux types de panneaux sont réalisés avec les mêmes dimensions géométriques et avantageusement en utilisant les mêmes technologies de structure, en particulier une structure de panneau sandwich comportant des revêtements en matériau composite et une âme alvéolaire telle qu'une âme dite en nid d'abeille, solution connue pour réaliser des panneaux d'habillage passifs.

Avantageusement, comme illustré sur la figure 3 les panneaux passifs 5 comportent des connecteurs factices 51, c'est à dire non fonctionnels, aptes à servir de support pour les prises du câblage électrique 3 du système de contrôle actif afin que les dites prises, inutilisées lorsque le panneau est un panneau passif 5, puissent être maintenues efficacement sans risque d'être endommagées ou d'endommager un autre élément de l'aéronef 1.

L'aéronef 1 suivant l'invention est donc apte à être équipé, en chaque emplacement préalablement déterminé comme susceptible dans une configuration particulière de l'aéronef de recevoir un panneau actif, soit d'un panneau actif 4 soit d'un panneau passif 5. En outre un panneau actif 4 destiné à un emplacement donné peut être d'un modèle différent, notamment en nombre et en disposition d'actionneurs 8 et ou de capteurs 7 suivant les performances recherchées.

En fonction de l'aménagement général de la cabine 2, par exemple la présence de systèmes de cuisines, et ou en fonction du niveau de confort acoustique recherché, lequel peut être différent suivant la catégorie de la cabine et ou la longueur des vols prévus, l'aéronef 1 comporte une répartition adaptée du nombre et du type de panneaux actifs 4 de différents standards et passifs 5.

La conversion d'une cabine 2 en ce qui concerne son niveau de confort acoustique est donc réalisé en remplaçant des panneaux actifs par des panneaux passifs 5 ou par des panneaux actifs de performances différentes et ou des panneaux passifs par des panneaux actifs 4 mécaniquement interchangeables et en raccordant les connecteurs 44 des panneaux actifs au câblage 3 du système d'alimentation des panneaux actifs et ou en fixant les prises en attente du câblage 3 aux prises factices 51 des panneaux passifs.

En pratique aucune modification significative du câblage 3 n'est nécessaire lors de la conversion de la cabine et le système 6 de contrôle actif du bruit dans la cabine est rendu opérationnel en agissant sur la configuration des moyens d'alimentation 61 des actionneurs des panneaux et de traitement des signaux des capteurs, le plus souvent par une modification de la configuration d'un logiciel supervisant le fonctionnement du système de contrôle actif du bruit.

On comprend à la description du mode de réalisation de l'invention que le dispositif peut être réalisé avec tout type de panneau d'habillage d'une cabine, par exemple des panneaux de plafond.

## Revendications

1. Procédé de conversion du confort acoustique d'une cabine (2) d'un avion (1) dont au moins une partie de l'espace est délimitée par des panneaux d'habillage, ladite cabine (2) comportant un système (6) de contrôle actif du bruit ambiant dans ladite cabine, ledit procédé de conversion étant **caractérisé en ce que** :
- entre une première configuration de la cabine (2) dans laquelle dite cabine un panneau d'au moins un emplacement est un panneau actif (4), ledit au moins un panneau actif comportant des actionneurs (8) alimentés par le système (6) de contrôle actif du bruit, le dit panneau actif étant raccordé à un câblage (3) d'alimentation de panneaux actifs agencé dans l'aéronef (1) de sorte que ledit câblage soit en mesure d'alimenter tout panneau actif (4) installé dans ladite première configuration de la cabine (2) par un système (61) d'alimentation des panneaux actifs. et ;
- une seconde configuration de la cabine (2) dans laquelle le panneau du au moins un emplacement considéré est un panneau passif (5) ne comportant pas de tels actionneurs ;
lors d'une conversion depuis la première configuration vers la seconde configuration, le panneau passif (5) est substitué au panneau actif (4) avec lequel il est mécaniquement interchangeable, ledit panneau actif étant, lors de la conversion, déconnecté du système de contrôle actif du bruit et le câblage (3) d'alimentation pour ledit panneau actif étant maintenu dans l'avion, et, lors d'une conversion depuis la seconde configuration vers la première configuration, le panneau actif (4) est substitué au panneau passif (5) avec lequel il est mécaniquement interchangeable, ledit panneau actif étant, lors de la conversion, connecté au système de contrôle actif du bruit par le câblage (3) d'alimentation présent dans l'avion (1).

2. Procédé suivant la revendication 1 dans lequel le câblage d'alimentation d'un panneau actif (4) auquel a été substitué un panneau passif (5) est fixé sur un connecteur factice (51) dudit panneau passif.

3. procédé de conversion du confort acoustique d'une cabine (2) suivant la revendication 1 ou la revendication 2 dans lequel lors d'une conversion un panneau actif (4) est choisi parmi des panneaux mécaniquement interchangeables de performances différentes en fonction du confort acoustique recherché.

4. Procédé suivant l'une des revendications précédentes dans lequel le système (61) d'alimentation des panneaux actifs est configuré en fonction des panneaux actifs (4) effectivement installés.

5. Avion (1) comportant au moins une cabine (2) dont au moins une partie de l'espace est délimitée par des panneaux d'habillage, ladite cabine étant pourvue d'un système (6) de contrôle actif du bruit ambiant dans ladite cabine, dans lequel :
- chaque panneau d'habillage de la cabine (2) est soit un panneau actif (4), comportant des actionneurs (8) alimentés par le système (6) de contrôle actif du bruit, soit un panneau passif (5) ne comportant pas de tels actionneurs ;
- un câblage (3) d'alimentation de panneaux actifs apte à être raccordé à des panneaux actifs est agencé ;
- un système (61) d'alimentation des panneaux actifs à bord de l'aéronef (1) est raccordé au câblage (3) d'alimentation des panneaux actifs ;
**caractérisé en ce que** le câblage d'alimentation de panneaux actifs est en mesure d'alimenter l'ensemble des panneaux actifs (4) susceptibles d'être installés dans la cabine (2), et **en ce qu'**un panneau passif (5) mécaniquement interchangeable avec un panneau actif (4) comporte au moins un connecteur factice (51) sur lequel est fixée une prise pour panneau actif (4) du câblage (3) d'alimentation des panneaux actifs.

6. Avion (1) suivant la revendication 5 dans lequel le câblage (3) d'alimentation des panneaux actifs comporte des câbles de raccordement de capteurs (7) du système (6) de contrôle actif du bruit au système (61) d'alimentation des panneaux actifs (4).

7. Avion (1) suivant la revendication 5 ou la revendication **6** dans lequel les actionneurs (8) sont intégrés dans l'épaisseur des panneaux actifs (4) pour entraîner les panneaux actifs (4) en vibration.

8. Avion (1) suivant l'une des revendications précédentes dans lequel les actionneurs (8) utilisent une technologie piézo-électrique.

## Claims

1. A method for converting the acoustic comfort of a cabin (2) of an aircraft
(1) in which at least part of the space is demarcated by trim panels, said cabin
(2) comprising a system (6) for the active control of ambient noise within said cabin, said conversion method being **characterised in that**:
- between a first configuration of the cabin (2) in which cabin a panel in at least one location is an active panel (4), said at least one active panel comprising actuators (8) powered by the active noise control system (6), said active panel being connected to active panel power supply wiring (3) installed on-board the aircraft (1) so that said wiring is capable of powering all active panels (4) installed within said first configuration of the cabin (2) by an active panel power supply system (61); and
- a second configuration of the cabin (2) wherein the panel of the at least one location considered is a passive panel (5) without such actuators;
when converting from the first configuration to the second configuration, the passive panel (5) is substituted to the active panel (4) with which it is mechanically interchangeable, said active panel being, during the conversion process, disconnected from the active noise control system and the power supply wiring (3) for said active panel being kept on-board the aircraft, and, during a conversion from the second configuration to the first configuration, the active panel (4) is substituted to the passive panel (5) with which it is mechanically interchangeable, said active panel being, during the conversion process, connected to the active noise control system by the power supply wiring (3) present on-board the aircraft (1).

2. A method according to claim 1, wherein the power supply wiring for an active panel (4) which was substituted by a passive panel (5) is attached to a dummy connector (51) of said passive panel.

3. A method for converting the acoustic comfort of a cabin (2) according to claim 1 or claim 2 wherein, during a conversion process, an active panel (4) is chosen from among the mechanically interchangeable panels with differing performances according to the acoustic comfort sought.

4. A method according to one of the previous claims wherein the active panel power supply system (61) is configured according to the active panels (4) effectively installed.

5. An aircraft (1) comprising at least one cabin (2) in which at least part of the space is demarcated by trim panels, said cabin being provided with a system (6) for the active control of ambient noise within said cabin, wherein:
- each trim panel of the cabin (2) is either an active panel (4), comprising actuators (8) powered by the active noise control system (6), or a passive panel (5) without such actuators;
- active panel power supply wiring (3) is installed, capable of being connected to active panels;
- an active panel power supply system (61) on-board the aircraft (1) is connected to the active panel power supply wiring (3);
**characterised in that** the active panel power supply wiring is capable of powering all active panels (4) which could be installed within the cabin (2), and **in that** a passive panel (5) mechanically interchangeable with an active panel (4) comprises at least one dummy connector (51) on which is attached a plug for the active panels (4) of the active panel power supply wiring (3).

6. An aircraft (1) according to claim 5 wherein the active panel power supply wiring (3) comprises wiring for connecting the sensors (7) of the active noise control system (6) to the power supply system (61) for the active panels (4).

7. An aircraft (1) according to claim 5 or claim 6 wherein the actuators (8) are integrated into the thickness of the active panels (4) so as to cause the active panels (4) to vibrate.

8. An aircraft (1) according to one of the previous claims wherein the actuators (8) use piezoelectric technology.

## Patentansprüche

1. Verfahren zur Umwandlung des akustischen Komforts in einer Kabine (2) eines Flugzeugs (1), bei der zumindest ein Teil des Raumes von Verkleidungspaneelen eingegrenzt wird, wobei die besagte Kabine (2) ein System (6) zur aktiven Kontrolle des Umgebungsgeräusches in der besagten Kabine umfasst, und das besagte Umwandlungsverfahren **dadurch gekennzeichnet ist, dass**:
- zwischen einer ersten Konfiguration der Kabine (2), bei der in der besagten Kabine eine Paneele an zumindest einer Stelle eine aktive Paneele (4) ist, und die besagte zumindest eine aktive Paneele Steller (8) umfasst, die durch das System (6) zur aktiven Geräuschkontrolle versorgt werden, und die besagte aktive Paneele an eine Kabelleitung (3) zur Versorgung der aktiven Paneele angeschlossen ist, die derart im Luftfahrzeug (1) angeordnet ist, dass die besagte Kabelleitung in der Lage ist, jede aktive Paneele (4) zu versorgen, die durch ein Versorgungssystem (61) der aktiven Paneelen in der besagten ersten Konfiguration der Kabine (2) installiert ist. und;
- einer zweiten Konfiguration der Kabine (2), bei der die Paneele der zumindest einen betrachteten Stelle eine passive Paneele (5) ist, in der solche Steller (8) nicht enthalten sind;
bei einer Umwandlung von der ersten Konfiguration auf die zweite Konfiguration die aktive Paneele (4) durch die passive Paneele (5) ersetzt wird, mit der sie mechanisch getauscht werden kann, wobei die besagte aktive Paneele bei dieser Umwandlung vom System zur aktiven Geräuschkontrolle getrennt wird und die Kabelleitung (3) zur Versorgung der besagten aktiven Paneele im Flugzeug beibehalten wird, und, bei einer Umwandlung von der zweiten Konfiguration auf die erste Konfiguration die passive Paneele (5) durch die aktive Paneele (4) ersetzt wird, mit der sie mechanisch getauscht werden kann, und die besagte aktive Paneele bei der Umwandlung über die im Flugzeug (1) vorhandene Kabelleitung (3) zur Versorgung mit dem System zur aktiven Geräuschkontrolle verbunden wird.

2. Verfahren nach Anspruch 1, bei dem die Versorgungskabelleitung einer aktiven Paneele (4), die durch eine passive Paneele (5) ersetzt wurde, an einem Dummy-Stecker (51) an der besagten passive Paneele befestigt wird.

3. Verfahren zur Umwandlung des akustischen Komforts in einer Kabine (2) nach Anspruch 1 oder Anspruch 2, bei dem bei einer Umwandlung unter mechanisch austauschbaren Paneelen unterschiedlicher Leistung, je nach gewünschtem akustischem Komfort, eine aktive Paneele (4) ausgewählt wird.

4. Verfahren nach einem der vorherigen Ansprüche, bei dem das Versorgungssystem (61) für die aktiven Paneele in Abhängigkeit von den tatsächlich installierten aktiven Paneelen (4) konfiguriert wird.

5. Flugzeug (1) umfassend zumindest eine Kabine (2) bei der zumindest ein Teil des Raumes von Verkleidungspaneelen eingegrenzt wird, und die besagte Kabine mit einem System (6) zur aktiven Kontrolle des Umgebungsgeräusches in der besagten Kabine versehen ist, bei dem
- jede Verkleidungspaneele der Kabine (2) entweder eine aktive Paneele (4) mit Stellern (8) ist, die vom System (6) zur aktiven Geräuschkontrolle versorgt werden, oder eine passive Paneele (5), in der solche Steller (8) nicht enthalten sind;
- eine Kabelleitung (3) zur Versorgung von aktiven Paneelen angeordnet ist, die mit den aktiven Paneelen verbunden werden kann;
- ein Versorgungssystem (61) für die aktiven Paneele an Bord des Luftfahrzeugs (1) an die Kabelleitung (3) zur Versorgung der aktiven Paneele angeschlossen ist;
**dadurch gekennzeichnet, dass** die Versorgungskabelleitung der aktiven Paneele in der Lage ist, alle aktiven Paneele (4) zu versorgen, die in der Kabine (2) installiert werden können, und dadurch, dass eine passive Paneele (5), die mechanisch gegen eine aktive Paneele (4) getauscht werden kann, zumindest einen Dummy-Stecker (51) umfasst, an dem ein Stecker für aktive Paneele (4) der Kabelleitung (3) zur Versorgung der aktiven Paneele befestigt wird.

6. Flugzeug (1) nach Anspruch 5, bei dem die Kabelleitung (3) zur Versorgung der aktiven Paneele Kabel zur Verbindung der Sensoren (7) des Systems (6) zur aktiven Geräuschkontrolle mit dem Versorgungssystem (61) für die aktiven Paneele (4) umfasst.

7. Flugzeug (1) nach Anspruch 5 oder Anspruch 6, bei dem die Steller (8) in die Schicht der aktiven Paneele (4) integriert sind, um die aktiven Paneele (4) in Schwingung zu versetzen.

8. Flugzeug (1) nach einem der vorherigen Ansprüche, bei dem die Steller (8) mit einer piezoelektrischen Technik arbeiten.
